# EUROPÄISCHE PATENTSCHRIFT

(11) **EP 3 691 437 B1**
(45) Veröffentlichungstag und Bekanntmachung des Hinweises auf die Patenterteilung: **05.01.2022**
(21) Anmeldenummer: 18779664.4
(22) Anmeldetag: 28.09.2018
(51) Int. Cl.: A01C 9/02

(54) **KEIMSCHONER FÜR EINE KARTOFFELPFLANZMASCHINE**
SHOOT PROTECTOR FOR A POTATO PLANTING MACHINE
SYSTÈME DE PROTECTION DES GERMES DESTINÉ À UNE MACHINE À PLANTER DES POMMES DE TERRE

(30) Priorität: 02.10.2017 DE 202017106002 U
(43) Veröffentlichungstag der Anmeldung: 12.08.2020
(73) Patentinhaber: Unger, Markus, 69120 Heidelberg (DE)
(72) Erfinder: Unger, Markus, 69120 Heidelberg (DE)
(74) Vertreter: BRP Renaud & Partner mbB Rechtsanwälte Patentanwälte Steuerberater
(86) Internationale Anmeldenummer: PCT/EP2018/076468
(87) Internationale Veröffentlichungsnummer: WO 2019/068582

(56) Entgegenhaltungen:
- DE-A1- 1 457 899
- DE-A1-102014 003 445
- DE-C- 498 844
- DE-U1-202014 104 335
- NL-C2- 1 005 451
- US-A- 4 221 305
- US-B1- 6 244 201

## Beschreibung

Die vorliegende Erfindung betrifft eine fahrbare Kartoffelpflanzmaschine mit einer Fördereinrichtung zum im Wesentlichen vertikalen Fördern von Kartoffeln.

Kartoffelpflanzmaschinen sind bereits langjährig und vielfältig im Einsatz und erleichtern das Pflanzen von Kartoffeln, indem sie nicht nur Legefurchen ziehen und die einzelnen Kartoffeln darin ablegen, sondern zusätzlich diese gegebenenfalls auch noch mit portioniertem Dünger versehen und anschließend mit Erde wieder überdecken. Hierdurch kann das Kartoffelpflanzen deutlich rationalisiert werden.

Bekannte fahrbare Kartoffelpflanzmaschinen weisen dabei üblicherweise auch eine Fördereinrichtung zum im Wesentlichen vertikalen Fördern von Kartoffeln aus einem Vorratsbehälter auf, wobei diese Fördereinrichtungen oftmals als Endlosförderer ausgebildet sind und ein oberes sowie ein unteres Rad, beispielsweise ein Kettenrad, aufweisen, um welches sich der Endlosförderer mit Bechern zum nach oben Fördern der Kartoffeln dreht. Da ein Durchmesser des oberen Rades hierbei üblicherweise größer ist als ein Durchmesser des unteren Rades, entsteht ein gewisser Winkel, welcher die zu fördernden Kartoffeln beim nach unten Transportieren auf der Rückseite der Förderbecher entlang einer Kanalwand rollt. Hierbei besteht jedoch die Gefahr, dass die Keime der Kartoffeln abbrechen und dadurch Zellsaft austritt, der eine Kanalinnenwand verschmiert und durch Ablagerungen von Staub und Dreck zu einer regelrechten Schmirgeloberfläche anwachsen lässt. Die ständig rauer werdende Oberfläche bricht dabei zumindest eine Vielzahl der Keime der zu transportierenden bzw. zu fördernden Kartoffeln ab, wodurch die Kartoffeln an der Keimbruchstelle eine Eintrittspforte für Bakterien und andere Schädlinge aufweisen. Zudem ist durch die abgebrochenen Keime mit einem erheblichen Ertragsverlust zu rechnen. Da Kartoffeln vor dem Pflanzen zum Teil auch mit einem Beizmittel (Pflanzenschutzmittel) behandelt werden, kommt eine derartige Keimbruchstelle auch mit dem Beizmittel in Kontakt, wodurch unter Umständen der Austrieb verzögert und dadurch ebenfalls ein wirtschaftlicher Schaden entstehen kann. Fahrbare Kartoffelpflanzmaschinen sind offenbart in US 4 221 305 A, DE 10 2014 003445 A1 und DE 14 57 899 A1.

Die vorliegende Erfindung beschäftigt sich daher mit dem Problem, eine Kartoffelpflanzmaschine anzugeben, welche ein Pflanzen der Kartoffeln ohne ein Abbrechen der Keime ermöglicht oder zumindest die Gefahr des Abbrechens der Keime beim Pflanzen reduziert.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Becherrückwand eines Endlosförderers mit einem Noppenprofil zu versehen, durch welches eine Lagerung der Kartoffeln derart möglich ist, dass die einzelnen Keime der Kartoffeln zwischen die Noppen greifen und durch nicht abbrechen und zugleich ein Abrollen der Kartoffeln an einer Kanalinnenwand der Fördereinrichtung, welches zum Abbrechen der Keime führt, unterbunden wird. Die erfindungsgemäße fahrbare Kartoffelpflanzmaschine weist dabei eine Fördereinrichtung zum im Wesentlichen vertikalen Fördern von Kartoffeln auf, die ein oberes und ein unteres Rad aufweist, beispielsweise ein Zahnrad oder ein Kettenrad, um welche ein Endlosförderer, beispielsweise in der Art eines Förderbandes, mit Bechern zum nach oben Fördern der Kartoffeln verläuft. Diese Becher sind dabei zumindest in einer Abwärtsbewegung, in welcher die zu pflanzenden Kartoffeln auf einer Becherrückseite aufliegen, in einem Kanal geführt, wobei die Becher nun erfindungsgemäß an ihrer Rückseite das zuvor beschrieben Noppenprofil aufweisen, welches die Gefahr eines Abbrechens von Keimen der Kartoffeln zumindest reduziert. Durch das Noppenprofil ist es nämlich erstmals möglich, ein Abrollen der Kartoffeln beim nach unten Fördern derselben an einer Kanalinnenwand zu verhindern, da die Kartoffeln auf dem Noppenprofil aufliegen und mit ihren Keimen zwischen die einzelnen Noppen eingreifen, ohne dass diese dabei abbrechen. Die zu pflanzenden Kartoffeln werden somit auf dem Noppenprofil nach unten transportiert und dabei hinsichtlich ihrer Lage - außer in vertikaler Richtung - nicht verändert. Insbesondere erfolgt nicht wie bislang üblich ein Entlangrollen der Kartoffeln an einer Kanalinnenwand beim nach unten Fördern, bei welchem bislang die Keime zum Großteil abbrachen und dadurch die zuvor beschriebenen Schäden hervorgerufen wurden. Mit der erfindungsgemäßen fahrbaren Kartoffelpflanzmaschine kann somit die Anzahl der abgebrochenen Keime zumindest stark reduziert, vorzugsweise sogar nahezu gänzlich auf Null gesenkt werden, wodurch diese weniger anfällig für Schädlinge und zugleich besser austriebsfähig gepflanzt werden können.

Dabei sei prinzipiell angemerkt, dass die hier beschriebene Kartoffelpflanzmaschine generell auch als Becherpflanzmaschine bezeichnet werden kann und selbstverständlich in der Lage ist auch andere Knollen als Kartoffeln zu pflanzen. Sämtliche im Zusammenhang mit der Kartoffelpflanzmaschine oder den zugehörigen Bechern bzw. Noppenprofilen beschriebene Merkmale gelten somit ausnahmslos auch für Becherpflanzmaschinen und deren Becher im Allgemeinen.

Bei einer vorteilhaften Weiterbildung der erfindungsgemäßen Lösung ist das Noppenprofil aus einem elastischen Material, insbesondere aus Gummi oder aus Kunststoff, ausgebildet. Ein derartiges elastisches Material, beispielsweise Gummi, ermöglicht zum einen eine nicht nur kostengünstige Herstellung des Noppenprofils, sondern zum anderen auch eine vergleichsweise elastische und weiche Lagerung der Kartoffeln beim nach unten Fördern in dem Kanal. Denkbar ist hierbei auch, dass das Noppenprofil als Kunststoffspritzgussteil ausgebildet ist.

Bei einer weiteren vorteilhaften Ausführungsform der erfindungsgemäßen Lösung ist das Noppenprofil mit dem zugehörigen Becher verbunden oder einstückig mit diesem ausgebildet. Denkbar ist somit, dass der Becher zusammen mit dem Noppenprofil, beispielsweise das Kunststoffspritzgussteil oder als Metallteil, hergestellt und an dem Endlosförderer angebracht werden kann. Durch eine separate Ausbildung des Noppenprofils ist zusätzlich auch eine nachträgliche Nachrüstung eines bestehenden Endlosförderers einer herkömmlichen fahrbaren Kartoffelpflanzmaschine möglich.

Zweckmäßig weist das Noppenprofil unterschiedlich lange Noppen auf, wobei der Becher auf der Rückseite eine Schräge aufweist und die Noppen des Noppenprofils hinsichtlich ihrer Länge derart ausgebildet sind, dass ihre freien Längsenden bei einer Abwärtsbewegung des Bechers eine im Wesentlichen horizontale Ebene bilden. Dies bietet den großen Vorteil, dass die zu pflanzenden Kartoffeln beim nach unten Bewegen mittels der Fördereinrichtung auf einer horizontalen Noppenebene liegen, auf welcher sie mit ihren Keimen zwischen die einzelnen Noppen eingreifen können. Ein Kontakt mit einer Wand bzw. einer Innenwand des Kanals kann so zuverlässig ausgeschlossen werden. Durch die gänzliche Vermeidung eines Kontakts zwischen der zu pflanzenden Kartoffeln und der Kanalinnenwand kann das Abbrechen der Keime besonders vorteilhaft vermieden werden.

Bei einer weiteren vorteilhaften Ausführungsform der erfindungsgemäßen Lösung weisen die Noppen eine axiale Länge L_{N} zwischen 0,5 und 2 cm auf. Ein Durchmesser der Noppen kann dabei zusätzlich oder alternativ ca. 0,4 cm aufweisen. Durch die angegebenen Maße kann eine besonders schonende Förderung der Kartoffeln erreicht werden, wodurch das Abbrechen der Keime der zu pflanzenden Kartoffeln besonders vorteilhaft vermieden werden kann.

Die vorliegende Erfindung beruht weiter auf dem allgemeinen Gedanken, einen Becher für eine zuvor beschriebene fahrbare Kartoffelpflanzmaschine anzugeben, auf einer Rückseite ein Noppenprofil aufweist, welches die Gefahr eines Abbrechens von Keimen der Kartoffeln zumindest reduziert. Mittels eines derartigen Bechers lässt sich somit auch eine Fördereinrichtung einer herkömmlichen Kartoffelpflanzmaschine mit den gleichen Vorteilen vergleichsweise einfach nachrüsten. Es ist somit möglich, herkömmliche Kartoffelpflanzmaschinen, bei welchen beim Pflanzen von Kartoffeln ein Großteil der Keime abbricht, mit dem erfindungsgemäßen Becher nachzurüsten und dadurch den Pflanzerfolg erheblich zu steigern.

Die vorliegende Erfindung beruht weiter auf dem allgemeinen Gedanken, ein Noppenprofil für einen solchen Becher anzugeben, mit welchem auf besonders einfache und kostengünstige Weise Becher an herkömmlichen Fördereinrichtungen nachgerüstet werden können, indem beispielsweise das erfindungsgemäße Noppenprofil mit der Rückseite der jeweiligen Becher verklebt, verschraubt oder anderweitig verbunden wird. Derartige Noppenprofile stellen somit eine besonders einfache und kostengünstige Aufrüstungsmöglichkeit dar.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch
- Fig. 1: eine erfindungsgemäße fahrbare Kartoffelpflanzmaschine,
- Fig. 2: einen Becher einer Fördereinrichtung der fahrbaren Kartoffelpflanzmaschine entsprechend dem Stand der Technik,
- Fig. 3: ein erfindungsgemäßer Becher mit einem erfindungsgemäßen Noppenprofil,
- Fig. 4: ein erfindungsgemäßes Noppenprofil mit Längen- und Durchmesserangaben und einer zugehörigen Kartoffel als Vergleichsobjekt,
- Fig. 5, 6: eine Ansicht auf ein erfindungsgemäßes Noppenprofil.

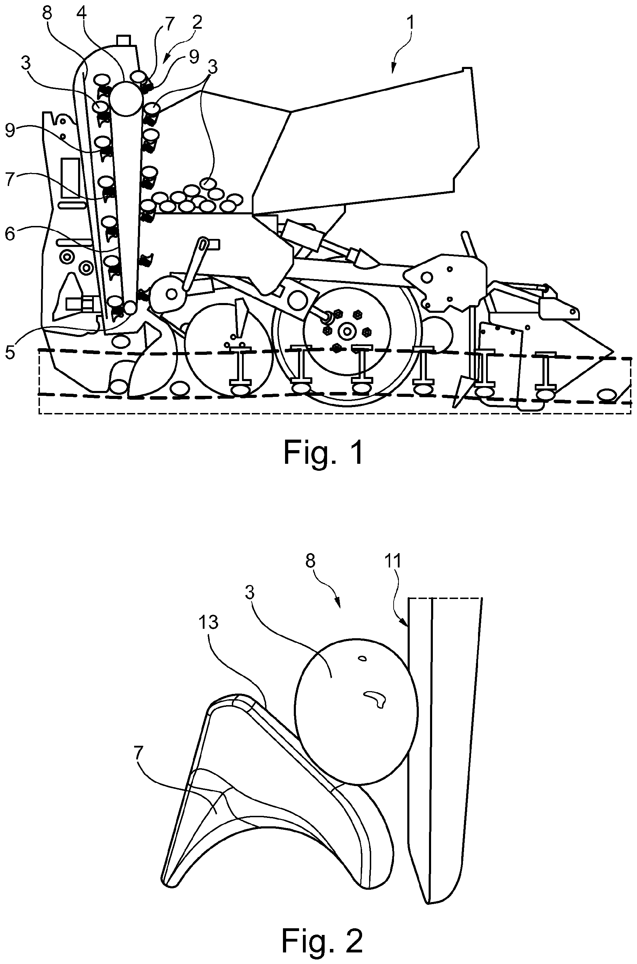

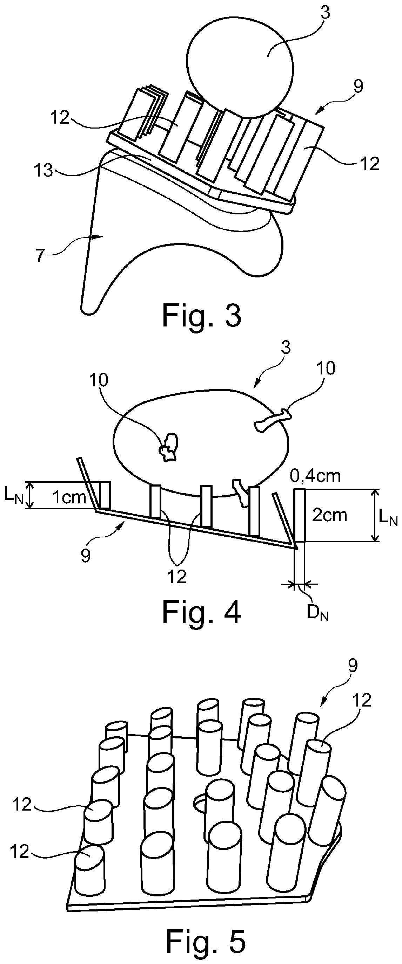

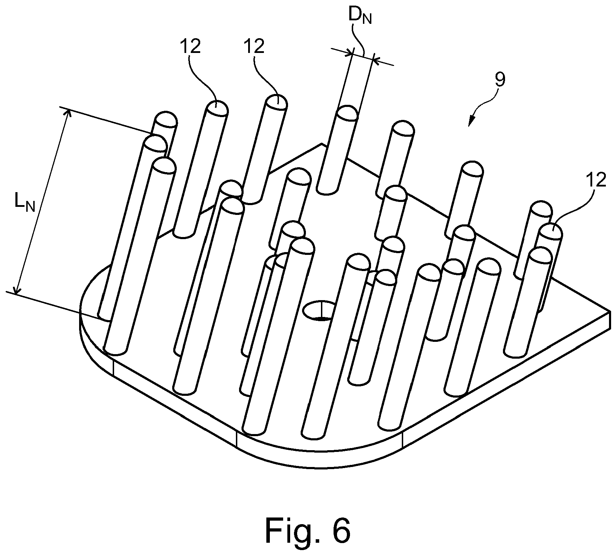

Entsprechend der Fig. 1, weist eine erfindungsgemäße fahrbare Kartoffelpflanzmaschine 1 oder generell eine Becherpflanzmaschine eine Fördereinrichtung 2 zum im Wesentlichen vertikalen Fördern von Kartoffeln 3 auf, wobei die Fördereinrichtung 2 ein oberes Rad 4 sowie ein unteres Rad 5, die beispielsweise als Kettenräder oder als Zahnräder ausgebildet sind, umfasst. Um die beiden Räder 4, 5 verläuft ein Endlosförderer 6 mit Bechern 7 (vergleiche auch die Fig. 2 und 3), die zumindest in einer Abwärtsbewegung in einem Kanal 8 geführt sind. Erfindungsgemäß weisen nun die Becher 7 an ihrer Rückseite ein Noppenprofil 9 (vergleiche auch die Fig. 3 bis 6, die die Gefahr eines Abbrechens von Keimen 10 (vergleiche Fig. 4) der Kartoffeln 3 zumindest reduziert.

Ohne das erfindungsgemäße Noppenprofil 9 rollt die Kartoffel 3 bei einer Abwärtsbewegung in dem Kanal 8 auf dem Rücken bzw. der Rückseite des Bechers 7 und einer Innenwand 11 des Kanals 8 entlang, wodurch die Keime 10 der Kartoffel 3 abbrechen und dadurch das Wachstum bzw. die Austriebsgeschwindigkeit der Kartoffel 3 nach dem Pflanzen erheblich reduziert wird. Zugleich wird die Kartoffel 3 durch die abgebrochenen Keime mit Zellsaft benetzt, der sich zudem an der Kanalinnenwand 11 ablagert und dort für eine Anlagerung von Schmutz und Dreck sorgt. Durch die Anlagerung von Schmutz und Dreck auf der Kanalinnenwand 11 entsteht dort eine sehr raue Oberfläche, durch welche die nach unten geförderte Kartoffel 3 ein regelrechtes Abschmirgeln erfährt, durch welches noch mehr Keime 10 abgebrochen werden.

Durch das erfindungsgemäße Noppenprofil 9 jedoch kann ein Abrollen der Kartoffel 3 an der Kanalinnenwand 11 zuverlässig verhindert werden, wobei die einzelnen Keime 10 zwischen einzelnen Noppen 12 des Noppenprofils 9 eingreifen und dadurch nicht abbrechen.

Das erfindungsgemäße Noppenprofil 9 ist dabei vorzugsweise aus einem elastischen Material, insbesondere aus Gummi oder aus Kunststoff, ausgebildet und dadurch nicht nur vergleichsweise leicht und einfach, sondern auch kostengünstig herstellbar. Das Noppenprofil 9 ist zudem mit dem zugehörigen Becher 7 verbunden oder einstückig mit diesem ausgebildet, wobei das nachträgliche Verbinden mit dem Becher 7 auch eine Nachrüstung bislang herkömmlicher Kartoffelpflanzmaschinen ermöglicht. Denkbar ist somit, dass der Becher 7 zusammen mit dem Noppenprofil 9, beispielsweise das Kunststoffspritzgussteil oder als Metallteil, hergestellt und an dem Endlosförderer 6 angebracht werden kann.

Betrachtet man die Fig. 2 bis 5, so kann man erkennen, dass die einzelnen Noppen 12 des Noppenprofils 9 unterschiedlich lang sind und insbesondere eine Länge L_{N} zwischen 0,5 und 2,0 cm aufweisen. Zudem können die einzelnen Noppen 12 einen Durchmesser D_{N} von ca. 0,4 mm aufweisen.

Betrachtet man die Fig. 2 und 3 weiter, so kann man erkennen, dass der Becher 7 auf seiner Rückseite eine Schräge 13 aufweist und die Noppen 12 des Noppenprofils 9 hinsichtlich ihrer axialen Länge L_{N} derart ausgebildet sind, dass ihre freien Längsenden bei einer Abwärtsbewegung (ähnlich wie in Fig. 3) eine im Wesentlichen horizontale Ebene bilden, auf welcher die Kartoffel 3 aufliegt und dabei mit ihren Keimen 10 zwischen die einzelnen Noppen 12 eingreifen kann. Hierdurch wird eine Beschädigung der einzelnen Keime 10 vermieden, insbesondere auch da ein bisheriges Abrollen der Kartoffel 3 an der Innenwand 11 des Kanals 8 vermieden wird.

Schutz soll für die vorliegende Erfindung nicht nur für die Kartoffelpflanzmaschine 1 beansprucht werden, sondern auch für einen Becher 7 einer solchen fahrbaren Kartoffelpflanzmaschine 1 mit einem Noppenprofil 9 an seiner Rückseite, ebenso wie für ein separates Noppenprofil 9 mit einzelnen Noppen 12, mittels welchem eine herkömmliche Fördereinrichtung einer herkömmlichen Kartoffelpflanzmaschine vergleichsweise einfach und kostengünstig nachgerüstet werden kann.

Mit dem erfindungsgemäßen Noppenprofil 9 auf der Rückseite der Becher 7 kann somit die Gefahr des Abbrechens der Keime 10 der Kartoffeln 3 erheblich reduziert werden, wodurch insbesondere auch Eintrittspforten für Bakterien und andere Schaderreger nicht entstehen. Zugleich können dadurch das Wachstum und die Austriebsfähigkeit beschleunigt und ein Eindringen einer Beize in die Schadstellen vermieden werden.

## Patentansprüche

1. Fahrbare Kartoffelpflanzmaschine (1) mit einer Fördereinrichtung (2) zum im Wesentlichen vertikalen Fördern von Kartoffeln (3), wobei die Fördereinrichtung (2) ein oberes und ein unteres Rad (4,5) aufweist, um welche ein Endlosförderer (6) mit Bechern (7) zum nach oben Fördern der Kartoffeln (3) verläuft, wobei die Becher (7) zumindest in einer Abwärtsbewegung in einem Kanal (8) geführt sind,
**dadurch gekennzeichnet,**
**dass** die Becher (7) an ihrer Rückseite ein Noppenprofil (9) aufweisen, wobei einzelne Keime (10) der Kartoffel (3) zwischen einzelnen Noppen (12) des Noppenprofils (9) eingreifen und somit die Gefahr eines Abbrechens von den Keimen (10) der Kartoffeln (3) zumindest reduziert wird.

2. Kartoffelpflanzmaschine nach Anspruch 1,
**dadurch gekennzeichnet,**
**dass** das Noppenprofil (9) aus einem elastischen Material, insbesondere aus Gummi oder einem Kunststoff, ausgebildet ist.

3. Kartoffelpflanzmaschine nach Anspruch 1 oder 2,
**dadurch gekennzeichnet,**
**dass** das Noppenprofil (9) mit dem zugehörigen Becher (7) verbunden oder einstückig mit diesem ausgebildet ist.

4. Kartoffelpflanzmaschine nach einem der vorhergehenden Ansprüche,
**dadurch gekennzeichnet,**
**dass** das Noppenprofil (9) unterschiedlich lange Noppen (12) aufweist.

5. Kartoffelpflanzmaschine nach Anspruch 4,
**dadurch gekennzeichnet,**
**dass** der Becher (7) auf der Rückseite eine Schräge (13) aufweist und die Noppen (12) des Noppenprofils (9) hinsichtlich ihrer Länge L_{N} derart ausgebildet sind, dass ihre freien Längsenden bei einer Abwärtsbewegung eine im Wesentlichen horizontale Ebene bilden.

6. Kartoffelpflanzmaschine nach Anspruch 4 oder 5, **dadurch gekennzeichnet,**
- **dass** die Noppen (12) eine axiale Länge L_{N} zwischen 0,5cm < L_{N} < 2,0 cm aufweisen, und/oder
- **dass** die Noppen (12) einen Durchmesser D_{N} von ca. 0,4cm aufweisen.

## Claims

1. Mobile potato planting machine (1) having a conveying device (2) for conveying potatoes (3) substantially vertically, wherein the conveying device (2) has an upper and a lower wheel (4,5), about which an endless conveyor (6) having cups (7) for upwardly conveying the potatoes (3) runs, wherein the cups (7) are guided at least in a downward movement in a channel (8),
**characterised in that**,
the cups (7) have, on their rear side, a pimpled profile (9), wherein individual shoots (10) of the potato (3) engage between individual pimples (12) of the pimpled profile (9) and thus at least reduce the risk of shoots (10) of the potatoes (3) breaking off.

2. Potato planting machine according to claim 1,
**characterised in that**,
the pimpled profile (9) is formed from an elastic material, in particular from rubber or a plastic.

3. Potato planting machine according to claim 1 or 2,
**characterised in that**,
the pimpled profile (9) is formed connected to the associated cup (7) or in one piece with the latter.

4. Potato planting machine according to any of the preceding claims,
**characterised in that**,
the pimpled profile (9) has different length pimples (12).

5. Potato planting machine according to claim 4,
**characterised in that**,
the cups (7), on the rear side, have a bevel (13) and the pimples (12) of the pimpled profile (9) are formed as regards their length L_{N} such that their free longitudinal ends form a substantially horizontal plane in the event of an upwards movement.

6. Potato planting machine according to claim 4 or 5,
**characterised in that**,
- the pimples (12) have an axial length L_{N} of between 0.5cm < L_{N} < 2.0 cm, and/or
- the pimples (12) have a diameter D_{N} of approx. 0.4 cm.

## Revendications

1. Planteuse de pommes de terre mobile (1) comprenant un dispositif de transport (2) pour transporter sensiblement verticalement des pommes de terre (3) ; dans laquelle le dispositif de transport (2) présente une roue supérieure et une roue inférieure (4, 5), autour de laquelle s'étend un transporteur sans fin (6) muni de gobelets (7) pour transporter les pommes de terre (3) vers le haut, dans laquelle les gobelets (7) sont guidés au moins selon un mouvement vers le bas dans un canal (8),
**caractérisée en ce**
**que** les gobelets (7) présentent au niveau de leur face arrière un profil de protubérances (9), dans lesquels chaque germe (10) de pomme de terre (3) entre en prise entre chaque protubérance (12) du profil de protubérances (9) et ainsi le risque de rupture des germes (10) de pommes de terre (3) est au moins réduit.

2. Planteuse de pommes de terre selon la revendication 1,
**caractérisée en ce**
**que** le profil de protubérances (9) est réalisé à partir d'un matériau élastique, en particulier en caoutchouc ou en une matière plastique.

3. Planteuse de pommes de terre selon la revendication 1 ou 2,
**caractérisée en ce**
**que** le profil de protubérances (9) est relié au gobelet (7) associé ou est réalisé d'une seule pièce avec celui-ci.

4. Planteuse de pommes de terre selon l'une quelconque des revendications précédentes,
**caractérisée en ce**
**que** le profil de protubérances (9) présente des protubérances (12) de différentes longueurs.

5. Planteuse de pommes de terre selon la revendication 4,
**caractérisée en ce**
**que** le gobelet (7) présente sur sa face arrière une inclinaison (13) et les protubérances (12) du profil de protubérances (9) sont réalisées en fonction de leur longueur L_{N} de telle manière que leurs extrémités longitudinales libres forment lors d'un mouvement vers le bas un plan sensiblement horizontal.

6. Planteuse de pommes de terre selon la revendication 4 ou 5,
**caractérisé en ce**
- **que** les protubérances (12) présentent une longueur axiale L_{N} comprise entre 0,5 cm < L_{N} < 2,0 cm, et/ou
- **que** les protubérances (12) présentent un diamètre D_{N} d'environ 0,4 cm.
